# EUROPÄISCHE PATENTSCHRIFT

(11) **EP 3 423 169 B1**
(45) Veröffentlichungstag und Bekanntmachung des Hinweises auf die Patenterteilung: **01.01.2020**
(21) Anmeldenummer: 17712417.9
(22) Anmeldetag: 23.02.2017
(51) Int. Cl.: B01D 36/00, B01D 29/21, B01D 29/58, B01D 17/04, B01D 39/18, B01D 39/16

(54) **FILTEREINSATZ UND KRAFTSTOFFFILTER**
FILTER INSERT AND FUEL FILTER
ÉLÉMENT FILTRANT ET FILTRE À CARBURANT

(30) Priorität: 29.02.2016 DE 102016103561
(43) Veröffentlichungstag der Anmeldung: 09.01.2019
(73) Patentinhaber: Hengst SE, 48147 Münster (DE)
(72) Erfinder: PIETSCHNER, Sieghard, 48268 Greven (DE); DORSCHEL, Moritz, 48153 Münster (DE); WEGMANN, Marcus, 48346 Ostbevern (DE); SCHÜTTPELZ, Andreas, 49086 Osnabrück (DE)
(74) Vertreter: Linnemann, Winfried
(86) Internationale Anmeldenummer: PCT/EP2017/054161
(87) Internationale Veröffentlichungsnummer: WO 2017/148790

(56) Entgegenhaltungen:
- WO-A1-2015/015192
- WO-A1-2015/140626
- US-A- 3 262 578
- US-A1- 2008 053 888

## Beschreibung

Die Erfindung betrifft einen Filtereinsatz eines Kraftstofffilters zum Abscheiden von festen Partikeln und von Wassertröpfchen aus Kraftstoff, wobei der Filtereinsatz wenigstens einen Filterstoffkörper aus einem Filtermaterial aufweist, wobei das Filtermaterial aus einer im Einsatz zuerst von dem Kraftstoff durchströmten Partikelfiltermediumlage und aus wenigstens einer abströmseitig auf der Partikelfiltermediumlage liegenden Koaleszermediumlage besteht. Außerdem betrifft die Erfindung einen Kraftstofffilter.

Ein Filtereinsatz der eingangs genannten Art ist aus dem Dokument WO 2015/140 626 A1 bekannt. Das Dokument offenbart einen Filtereinsatz eines Kraftstofffilters zum Abscheiden von festen Partikeln und von Wassertröpfchen aus Kraftstoff, wobei der Filtereinsatz wenigstens einen Filterstoffkörper aus einem Filtermaterial aufweist, wobei das Filtermaterial aus einer Partikelfiltermediumlage und aus wenigstens einer auf der Partikelfiltermediumlage liegenden Koaleszermediumlage besteht. Die Koaleszermediumlage weist eine in Durchströmungsrichtung gemessene Dicke auf, die so groß sein kann wie die in Durchströmungsrichtung gemessene Dicke der Partikelfiltermediumlage, zum Beispiel eine Dicke zwischen 0,5 und 1 mm. Die Koaleszermediumlage besteht aus einem wenig hydrophilen Material und die Koaleszermediumlage kann als Abstandshalter zwischen den Falten der Partikelfiltermediumlage wirken.

Als nachteilig werden bei diesem Stand der Technik der hohe fertigungstechnische Aufwand und der große Bedarf an Koaleszermedium pro Flächeneinheit des Filtermaterials angesehen.

Aus dem Dokument WO 2007/041 559 A2 ist ein Kraftstofffilter bekannt. Bei diesem besteht die Partikelfiltermediumlage aus Cellulosefasern. Die Koaleszermediumlage besteht aus hydrophilen synthetischen Fasern, die einen in Durchströmungsrichtung größer werdenden mittleren Durchmesser aufweisen. Zur Erzielung eines hohen Wasserabscheidegrades wird hier eine im Verhältnis zur Partikelfiltermediumlage relativ dicke Koaleszermediumlage vorgeschlagen, um eine möglichst lange Verweilzeit der Wassertröpfchen in der Koaleszermediumlage zu erreichen.

Als nachteilig wird bei dem bekannten Filtermaterial angesehen, dass zum einen seine Herstellung aufwendig ist, weil die aus synthetischen Fasern gebildete Koaleszermediumlage einen in Durchströmungsrichtung verlaufenden Gradienten ihres mittleren Faserdurchmessers im Sinne einer Zunahme des mittleren Faserdurchmessers aufweisen muss, und dass zum anderen die Koaleszermediumlage im Verhältnis zur Partikelfiltermediumlage relativ dick sein soll, was einen hohen Bedarf an Koaleszermedium und an Raum zu dessen Unterbringung zur Folge hat.

Für die vorliegende Erfindung stellt sich daher die Aufgabe, einen Filtereinsatz der eingangs genannten Art zu schaffen, welcher die angegebenen Nachteile vermeidet und welcher insbesondere mit einem geringeren Herstellungsaufwand gefertigt werden kann und einen geringeren mengenmäßigen Bedarf an Koaleszermedium pro Flächeneinheit des Filtermaterials und an Raum zur Unterbringung hat. Außerdem soll ein entsprechender Kraftstofffilter geschaffen werden.

Die Lösung des ersten, den Filtereinsatz betreffenden Teils der Aufgabe gelingt erfindungsgemäß mit einem Filtereinsatz der eingangs genannten Art, welcher dadurch gekennzeichnet ist,
dass die Koaleszermediumlage oder eine Anordnung aus mehreren Koaleszermediumlagen eine vorgebbare Mindest-Hydrophilie aufweist, wobei das Maß der Hydrophilie nach Wassernotentest einem Isopropanol-Volumenanteil von 25 %, vorzugsweise von 20%, weiter vorzugsweise von 15%, entspricht,
dass die Koaleszermediumlage oder die Anordnung aus mehreren Koaleszermediumlagen hinsichtlich ihrer geometrischen Struktur und/oder ihrer physikalischen Eigenschaften und/oder ihrer chemischen Eigenschaften in Durchströmungsrichtung gradientenfrei ausgebildet ist,
dass die Koaleszermediumlage oder die Anordnung aus mehreren Koaleszermediumlagen eine in Durchströmungsrichtung gemessene Dicke aufweist, die kleiner ist als die in Durchströmungsrichtung gemessene Dicke der Partikelfiltermediumlage,
dass das Filtermaterial zickzackförmig zu einem hohlzylindrischen oder quaderförmigen Körper gefaltet ist,
dass die Koaleszermediumlage oder die Anordnung aus mehreren Koaleszermediumlagen eine Dicke zwischen 0,1 und 1,5 mm, vorzugsweise zwischen 0,2 und 0,6 mm, hat und
dass an einer stromab liegenden Seite des gefalteten Filtermaterials die Koaleszermediumlage oder Anordnung aus mehreren Koaleszermediumlagen als Abstandshalter zwischen den Falten der Partikelfiltermediumlage wirkt.

Vorteilhaft lässt sich bei dem erfindungsgemäßen Filtereinsatz die Koaleszermediumlage oder die Anordnung aus mehreren Koaleszermediumlagen fertigungstechnisch einfach herstellen, weil sie hinsichtlich ihrer geometrischen Struktur und/oder ihrer physikalischen Eigenschaften und/oder ihrer chemischen Eigenschaften in Durchströmungsrichtung gradientenfrei ausgebildet ist. Hierdurch kann ein kostengünstigeres Material für die Koaleszermediumlage oder Koaleszermediumlagen verwendet werden, was die Kosten des Filtermaterials reduziert.

Mit gradientenfreier Ausbildung ist hier gemeint, dass die betreffende Eigenschaft oder die betreffenden Eigenschaften des Koaleszermediums über die in Durchströmungsrichtung betrachtete Dicke der Koaleszermediumlage oder -lagen keine Änderungen aufweisen, die über ein geringes, für die Abscheidewirkung praktisch nicht relevantes Maß hinausgehen. Geringfügige Änderungen im Koaleszermedium über dessen Dicke gesehen können z.B. im Zuge eines Herstellungsprozesses zwangsläufig entstehen, haben aber keinen Einfluss auf die Abscheidewirkung des Koaleszermediums. Auch eine gegebenenfalls vorhandene zusätzliche dünne Schutzlage auf einer oder beiden Flachseiten der Koaleszermediumlage(n) soll hier nicht als eine einen Gradienten verursachende oder darstellende Lage verstanden werden, da eine solche Schutzlage lediglich einen mechanischen Schutz, z. B. gegen ein Ausfusseln oder Ausfasern der eigentlichen Koaleszermediumlage(n) bei deren Verarbeitung und Handhabung sowie im Filterbetrieb, bildet, ohne einen Einfluss auf die Abscheidewirkung zu nehmen.

Da die Lagen des Filtermaterials zumindest zum Teil bei Verwendung entsprechender Materialien nachgiebig sind, erfolgt zur Sicherstellung vergleichbarer Werte die Messung der vorstehend angegebenen Dickenwerte nach DIN ISO 534, hier konkret mit einem Anpressdruck von 12,5 kPa und einer Prüffläche von 2 cm².

Dadurch, dass an der stromab liegenden Seite des gefalteten Filtermaterials die dünne Koaleszermediumlage oder Anordnung aus mehreren Koaleszermediumlagen zusätzlich als Abstandshalter zwischen den Falten der Partikelfiltermediumlage wirkt, wird eine hohe Faltendichte ermöglicht, die nicht kleiner sein muss als bei Filtermaterialien, die nur aus einer Partikelfiltermediumlage bestehen.

Vorteilhaft ist weiterhin, dass eine geringere Menge an Koaleszermedium pro Flächeneinheit des Filtermaterials eingesetzt werden muss, weil die Koaleszermediumlage oder die Anordnung aus mehreren Koaleszermediumlagen eine in Durchströmungsrichtung gemessene Dicke aufweist, die kleiner ist als die in Durchströmungsrichtung gemessene Dicke der Partikelfiltermediumlage.

Weiter sorgt für eine gute Koaleszenzwirkung, dass die/jede Koaleszermediumlage eine vorgebbare, vorstehend angegebene Mindest-Hydrophilie aufweist. Der Wassernotentest, auch "3M"-Test genannt, ist zwar nicht genormt, wird aber in Anlehnung an einen Ölnotentest gemäß DIN ISO 14419, angewendet, um ein Maß der Hydrophilie für ein Medium zu definieren. Basis des Wassernotentests sind mehrere Flüssigkeitsmischungen aus Wasser mit unterschiedlichen Volumenanteilen an Isopropanol. Die Wassernote wird dadurch bestimmt bzw. definiert, dass Tropfen der Flüssigkeitsmischungen auf das Medium gegeben werden. Die Flüssigkeitsmischung, deren Tropfen gerade noch nicht das Medium benetzen, definiert die Wassernote und damit das Maß der Hydrophilie des Mediums. Je größer der Isopropanol-Volumenanteil ist, umso weniger hydrophil ist das geprüfte Medium.

Trotz des einfacheren Koaleszermediums und trotz der relativ geringen Dicke der Koaleszermediumlage oder der Anordnung mehrerer Koaleszermediumlagen wird mit dem erfindungsgemäßen Filtereinsatz eine wirksame Filterung von Feststoffpartikel und Wassertröpfchen enthaltendem Kraftstoff gewährleistet. Diese gute Filterwirkung des Filtermaterials beruht auf der Erkenntnis, dass innerhalb des Filtermaterials die Partikelfiltermediumlage nicht nur die Feststoffpartikel zurückhält, sondern zugleich auch eine wirksame Vorstufe für die Abscheidung von Wassertröpfchen aus dem Kraftstoff bildet, in welcher die ursprünglich kleinen Wassertröpfchen schon zu weniger kleinen Wassertröpfchen oder Wasserfilmen oder Tropfenansammlungen koalesziert werden. Diese Wirkung der Partikelfiltermediumlage tritt auch bei Verwendung gängiger, sowohl hydrophiler als auch hydrophober, Partikelfiltermedien ein. Die Koaleszermediumlage oder Anordnung aus mehreren Koaleszermediumlagen muss dann nur noch die schon größeren, aus der Partikelfiltermediumlage zusammen mit dem Kraftstoffstrom übergebenen Wassertröpfchen oder Wasserfilme final zu ausreichend großen Wassertropfen koaleszieren und innerhalb der Koaleszermediumlage oder -lagen mittels Schwerkraft drainieren und/oder mit dem Kraftstoffstrom abgeben, damit sie dann nach dem Austritt aus der Koaleszermediumlage oder aus der Anordnung mehrerer Koaleszermediumlagen in an sich bekannter Art und Weise, z. B. mittels Schwerkraft und/oder Sieben, aus dem Kraftstoffstrom separiert und für sich abgeführt oder gesammelt werden. Für dieses finale Koaleszieren bzw. für die finale Generierung von relativ großen Wassertropfen und deren Drainierung und/oder Abgabe in die reinseitige Kraftstoffphase genügt erfindungsgemäß eine relativ dünne, die Dicke der Partikelfiltermediumlage unterschreitende Dicke der Koaleszermediumlage oder Anordnung mehrerer Koaleszermediumlagen.

Bei dem erfindungsgemäßen Filtermaterial tritt ein Synergie-Effekt hinsichtlich der Abscheidung der Wassertröpfchen aus dem Kraftstoff auf, denn experimentelle Untersuchungen der Erfinder haben ergeben, dass es bei einer separaten, von der Partikelfiltermediumlage beabstandeten Anordnung der dünnen Koaleszermediumlage oder -lagen, d. h. ohne deren unmittelbare Anbindung an das Partikelfiltermedium, in dem so gebildeten Filtersystem im Vergleich zu einem Filtersystem mit dem erfindungsgemäßen Filtermaterial zu keiner wirksamen Koaleszenz und damit auch zu keiner ausreichenden Wasserabscheidewirkung kommt.

Zur Erzielung einer großen für das Koaleszieren nutzbaren Oberfläche im Koaleszermedium ist in weiterer Ausgestaltung der Erfindung bevorzugt vorgesehen, dass die/jede Koaleszermediumlage aus einem Fasermaterial gebildet ist. Alternativ kann die/jede Koaleszermediumlage auch aus einem Schaum- oder Sintermaterial mit entsprechenden Eigenschaften gebildet sein.

Weiter bevorzugt ist dabei die/jede Koaleszermediumlage aus einem Schmelz-Blas-Vlies ("Meltblown"-Vlies) oder einem nassgelegten Vlies oder einem Gewebe oder einem Filz gebildet.

Die/jede Koaleszermediumlage ist bevorzugt aus synthetischen Fasern, vorzugsweise aus Polyesterfasern, weiter vorzugsweise aus Polyamidfasern, oder aus hydrophilen Fasern, vorzugsweise Zellulose, Naturwolle oder Naturfasern, gebildet, da diese Materialien die für den Koaleszenzvorgang nötigen Eigenschaften aufweisen und weil sie kostengünstig verfügbar sind. Die synthetischen Fasern können ausgerüstete Fasern sein, um das Maß ihrer Hydrophilie zu erhöhen oder auf einen gewünschten Wert einzustellen.

Wie oben erwähnt, ist die Koaleszermediumlage oder die Anordnung aus mehreren Koaleszermediumlagen hinsichtlich ihrer geometrischen Struktur und/oder ihrer physikalischen Eigenschaften und/oder ihrer chemischen Eigenschaften in Durchströmungsrichtung gradientenfrei ausgebildet. Eine diesbezügliche Konkretisierung sieht vor, dass die Koaleszermediumlage oder die Anordnung aus mehreren Koaleszermediumlagen hinsichtlich ihrer Faserdicke und/oder ihrer Faserdichte und/ oder ihrer Porosität und/oder ihrer Porendurchmesser und/oder ihres Luftdurchlasses und/oder ihrer Permeabilität und/oder einer Ausrüstung und/oder ihrer Oberflächenenergie und/oder ihrer Hydrophilie gradientenfrei ausgebildet ist. Dabei kann die Koaleszermediumlage oder die Anordnung aus mehreren Koaleszermediumlagen in allen oder mehreren oder nur einer der vorgenannten Eigenschaften oder Parameter gradientenfrei ausgebildet sein.

Für einen wirksamen Koaleszenzeffekt in der/den Koaleszermediumlage(n) ist es günstig, wenn die Fasern der/jeder Koaleszermediumlage einen Faserdurchmesser zwischen 0,3 und 50 µm, vorzugsweise zwischen 1 und 40 µm, weiter vorzugsweise zwischen 3 und 30 µm, und einen mittleren Faserdurchmesser von größer als 2 µm, vorzugsweise größer als 5 µm, weiter vorzugsweise größer als 10 µm, haben.

Zu einem wirksamen Koaleszenzeffekt in der/den Koaleszermediumlage(n) wird weiter beigetragen, wenn die/jede Koaleszermediumlage einen Porengrößenbereich zwischen 0,5 und 150 µm, vorzugsweise zwischen 2 und 120 µm, und eine mittlere Porengröße von größer als 4 µm, vorzugsweise größer als 8 µm, hat.

Zwecks einer guten Koaleszenzwirkung ist weiter vorzugsweise vorgesehen, dass die/jede Koaleszermediumlage einen MFP-Wert ("Mean Flow Pore Size") von größer als 8 µm, vorzugsweise von größer als 12 µm, weiter vorzugsweise von größer als 25 µm, hat.

Erfindungsgemäß ist weiter vorgesehen, dass die Koaleszermediumlage oder die Anordnung aus mehreren Koaleszermediumlagen bei einem Differenzdruck von 200 Pa eine Luftdurchlässigkeit von weniger als 3.000 l/m²s, vorzugsweise von weniger als 2.000 l/m²s, aufweist.

Für die Sicherstellung der gewünschten Funktionen des Filtereinsatzes gemäß Erfindung genügt in vielen Anwendungsfällen eine einzige Koaleszermediumlage. Alternativ kann das Filtermaterial des Filtereinsatzes auch eine Anordnung aus mehreren Koaleszermediumlagen aufweisen, wobei dann diese Anordnung vorzugsweise zwei oder drei Lagen umfasst. Die mehreren Koaleszermediumlagen sind dabei zweckmäßig untereinander gleich.

Die Partikelfiltermediumlage des Filtermaterials des Filtereinsatzes kann aus für die Partikelfilterung gängigen Materialen bestehen; bevorzugt ist die Partikelfiltermediumlage aus einem Filterpapier oder Filtervlies oder Filterfilz oder Filternonwoven oder Filtergewebe oder Sinter- oder Filterelement-Formelement gebildet.

Wie eingangs erwähnt, besteht das Filtermaterial aus einer Partikelfiltermediumlage und aus wenigstens einer auf der Partikelfiltermediumlage liegenden Koaleszermediumlage. Je nach den mechanischen Eigenschaften der Lagen kann es genügen, dass die Koaleszermediumlage oder die Anordnung aus mehreren Koaleszermediumlagen auf die Partikelfiltermediumlage locker aufgelegt ist. Wenn ein stärkerer Zusammenhalt zwischen den Lagen nötig oder gewünscht ist, dann kann die Koaleszermediumlage oder die Anordnung aus mehreren Koaleszermediumlagen mit der Partikelfiltermediumlage verbunden, insbesondere auf die Partikelfiltermediumlage aufgeklebt oder auf dieser thermofixiert oder thermokalandert, sein.

Bei Bedarf kann zumindest auf einer die Abströmseite bildenden Oberfläche der Koaleszermediumlage oder -lagen eine Schutzschicht angeordnet oder angebracht sein, die einen mechanischen Schutz, z. B. gegen ein Ausfusseln oder Ausfasern der Koaleszermediumlage oder -lagen, bildet, ohne den Koaleszierungsprozess zu beeinflussen.

Neben dem Filterstoffkörper kann der Filtereinsatz in bekannter Weise den Filterstoffkörper einfassende Endscheiben und/oder ein den Filterstoffkörper an seiner stromab liegenden Oberfläche abstützendes, gegen Kollabieren schützendes Stützgitter aufweisen.

Weiter ist für den erfindungsgemäßen Filtereinsatz bevorzugt vorgesehen, dass in Durchströmungsrichtung gesehen stromab des Filterstoffkörpers im Abstand von diesem ein Sieb angeordnet ist. Mit dem Sieb erfolgt die endgültige Separierung der dort ankommenden großen Wassertropfen aus dem Kraftstoff, wobei mit der Integration des Siebes in den Filtereinsatz gewährleistet ist, dass bei jeder Filterwartung mit Austausch des Filtereinsatzes zugleich auch ein frisches Sieb in den zugehörigen Filter eingebaut wird.

Um die am Sieb ankommenden Wassertropfen sicher zurückzuhalten ohne einen zu großen Strömungswiderstand für den gefilterten Kraftstoff zu bilden, ist vorgesehen, dass das Sieb eine Durchlassöffnungsgröße zwischen 5 und 200 µm, vorzugsweise zwischen 10 und 100 µm, weiter vorzugsweises zwischen 10 und 30 µm, aufweist.

Zur Lösung des zweiten, den Kraftstofffilter betreffenden Teils der Aufgabe wird ein Kraftstofffilter zum Abscheiden von festen Partikeln und von Wassertröpfchen aus Kraftstoff vorgeschlagen, der dadurch gekennzeichnet ist, dass er wenigstens einen Filtereinsatz nach einem der Ansprüche 1 bis 14 aufweist.

Aufgrund der geringen Dicke des erfindungsgemäßen Filtermaterials und der dadurch ermöglichten kompakten Bauweise des erfindungsgemäßen Filtereinsatzes kann letzterer vorteilhaft auch in herkömmlichen Kraftstofffiltern einfach anstelle herkömmlicher Filtereinsätze eingesetzt werden, ohne dass am Kraftstofffilter, insbesondere an dessen Gehäuse, bauliche Veränderungen nötig wären.

Im Folgenden wird ein Ausführungsbeispiel der Erfindung anhand einer Zeichnung erläutert. Die Figuren der Zeichnung zeigen:
- Figur 1: einen sternförmig gefalteten, Teil eines Filtereinsatzes bildenden Filterstoffkörper aus einem zweilagigen Filtermaterial zusammen mit einem zentralen Sieb, im Querschnitt, und
- Figur 2: den Filterstoffkörper und das Sieb aus Figur 1 im Längsschnitt.

In der folgenden Figurenbeschreibung sind gleiche Teile in den verschiedenen Zeichnungsfiguren stets mit den gleichen Bezugszeichen versehen, sodass nicht zu jeder Zeichnungsfigur alle Bezugszeichen erneut erläutert werden müssen.

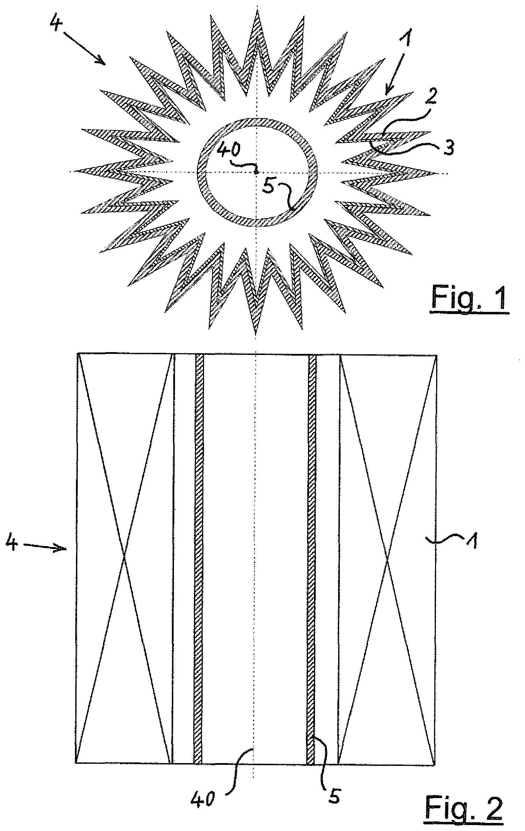

Figur 1 der Zeichnung zeigt einen symmetrisch zu einer Längsmittelachse 40 sternförmig gefalteten, hohlzylindrischen Filterstoffkörper 4 aus einem zweilagigen Filtermaterial 1 zusammen mit einem zentralen, hohlzylindrischen Sieb 5 im Querschnitt. Der Filterstoffkörper 4 ist Teil eines hier im Übrigen nicht dargestellten Filtereinsatzes für einen Kraftstofffilter und dient zum Abtrennen von festen Schmutzpartikeln und von Wassertröpfchen aus Kraftstoff, insbesondere Dieselkraftstoff, z.B. zur Versorgung einer Brennkraftmaschine eines Kraftfahrzeugs.

Bei dem in der Zeichnung dargestellten Beispiel strömt im betrieblichen Einsatz des Filterstoffkörpers 4 der Kraftstoff von außen her durch das Filtermaterial 1 hindurch nach innen.

Eine erste, äußere Lage des Filtermaterials 1 ist durch eine Partikelfiltermediumlage 2, z. B. aus einem Filterpapier oder Filtervlies oder Filterfilz oder Filternonwoven oder Filtergewebe, gebildet. Eine erste, übliche Funktion der Partikelfiltermediumlage 2 ist es, mit dem zu filternden Kraftstoff zugeführte feste Schmutzpartikel einer Größe oberhalb einer vorgebbaren Grenzgröße zurückzuhalten. Eine zweite Funktion dieser Partikelfiltermediumlage 2 ist es hier, die Bewegungsgeschwindigkeit der mit dem zu filternden Kraftstoff zugeführten Wassertröpfchen zu verringern und schon eine gewisse Koaleszierung der Wassertröpfchen zu bewirken, was, wie überraschend festgestellt wurde, auch mit für die Partikelfiltermediumlage 2 gängigen Materialien funktioniert. Durch besondere Auswahl des Materials für die Partikelfiltermediumlage 2 kann, ohne Verschlechterung der Filterfunktion für abzutrennende Feststoffpartikel, die Koaleszenzwirkung der Partikelfiltermediumlage 2 bedarfsweise noch gesteigert werden.

Eine zweite, innere Lage des Filtermaterials 1 ist durch eine Koaleszermediumlage 3 gebildet, die unmittelbar auf der Partikelfiltermediumlage 2 aufliegt. Dabei kann, je nach den mechanischen Eigenschaften, die Koaleszermediumlage 3 locker auf die Partikelfiltermediumlage 2 aufgelegt oder alternativ mit dieser verbunden, z. B. verklebt oder thermofixiert, sein.

Die Funktion der Koaleszermediumlage 3 ist es, die mit dem Kraftstoffstrom zugeführten, in der Partikelfiltermediumlage 2 schon gegenüber ihrer Ursprungsgröße vergrößerten Wassertröpfchen zu noch größeren, vom Kraftstoff separierbaren Wassertropfen zu koaleszieren und diese dann unter Schwerkraftwirkung zu drainieren oder mit dem Kraftstoffstrom zu einer nachfolgenden Separierung an dem stromab beabstandet zum Filterstoffkörper 4 liegenden Sieb 5 abzugeben. Hierzu besteht die Koaleszermediumlage 3 zweckmäßig aus einem eine ausreichende Hydrophilie aufweisenden Material, wie z. B. einem Schmelz-Blas-Vlies ("Meltblown"-Vlies) aus Polyamid- oder Polyester-Fasern, oder alternativ aus natürlichen Fasern.

Die Koaleszermediumlage 3 braucht für die vorgenannten Funktionen nur eine relativ geringe Dicke aufzuweisen, die kleiner als die Dicke der Partikelfiltermediumlage 2 ist oder, wie im Beispiel dargestellt, sogar deutlich kleiner als die Dicke der Partikelfiltermediumlage 2 sein kann, weil die Partikelfiltermediumlage 2 schon einen Teil der Koaleszierungsfunktion für die Wassertröpfchen erfüllt. Es tritt im Zusammenwirken der Partikelfiltermediumlage 2 und der darauf liegenden Koaleszermediumlage 3 hinsichtlich des Wirkungsgrades der Wasserabscheidung ein Synergie-Effekt auf, der deutlich über den Wirkungsgrad hinausgeht, der bei einer Anordnung einer gleichen Partikelfiltermediumlage 2 und einer gleichen, dünnen Koaleszermediumlage 3 mit Abstand voneinander erreicht würde.

Figur 2 zeigt den symmetrisch zur Längsmittelachse 40 angeordneten, aus dem Filtermaterial 1 gebildeten Filterstoffkörper 4 aus Figur 1 im Längsschnitt. Radial innen ist das ebenfalls symmetrisch zur Längsmittelachse 40 angeordnete, hohlzylinderförmige Sieb 5 im Längsschnitt sichtbar.

Im betrieblichen Einsatz wird der Filterstoffkörper 4 in Radialrichtung von außen nach innen von zu filterndem Kraftstoff durchströmt. Dabei werden im zu filternden Kraftstoff mitgeführte feste Schmutzpartikel in der gemäß Figur 1 äußeren Partikelfiltermediumlage 2 zurückgehalten. Die ebenfalls im zu filternden Kraftstoff mitgeführten Wassertröpfchen werden innerhalb der Partikelfiltermediumlage 2 in ihrer Bewegungsgeschwindigkeit gebremst und zu schon größeren Wassertröpfchen koalesziert und dann an die innen auf der Partikelfiltermediumlage 2 liegende Koaleszermediumlage 3 übergeben. In der eine passende Hydrophilie aufweisenden Koaleszermediumlage 3 werden die Wassertröpfchen zu so großen Wassertropfen koalesziert, dass deren Abscheiden aus dem Kraftstoff durch Schwerkraft und/oder an dem Sieb 5 möglich wird.

**Bezugszeichenliste:**

| Zeichen | Bezeichnung |
|---|---|
| 1 | Filtermaterial |
| 2 | Partikelfiltermediumlage |
| 3 | Koaleszermediumlage |
| 4 | Filterstoffkörper |
| 40 | Längsmittelachse |
| 5 | Sieb |

## Patentansprüche

1. Filtereinsatz eines Kraftstofffilters zum Abscheiden von festen Partikeln und von Wassertröpfchen aus Kraftstoff, wobei der Filtereinsatz wenigstens einen Filterstoffkörper (4) aus einem Filtermaterial (1) aufweist, wobei das Filtermaterial (1) aus einer im Einsatz zuerst von dem Kraftstoff durchströmten Partikelfiltermediumlage (2) und aus wenigstens einer abströmseitig auf der Partikelfiltermediumlage (2) liegenden Koaleszermediumlage (3) besteht,
**dadurch gekennzeichnet,**
**dass** die Koaleszermediumlage (3) oder eine Anordnung aus mehreren Koaleszermediumlagen (3) eine vorgebbare Mindest-Hydrophilie aufweist, wobei das Maß der Hydrophilie nach Wassernotentest einem Isopropanol-Volumenanteil von 25 %, vorzugsweise von 20%, weiter vorzugsweise von 15%, entspricht,
**dass** die Koaleszermediumlage (3) oder die Anordnung aus mehreren Koaleszermediumlagen (3) hinsichtlich ihrer geometrischen Struktur und/ oder ihrer physikalischen Eigenschaften und/oder ihrer chemischen Eigenschaften in Durchströmungsrichtung gradientenfrei ausgebildet ist,
**dass** die Koaleszermediumlage (3) oder die Anordnung aus mehreren Koaleszermediumlagen (3) eine in Durchströmungsrichtung gemessene Dicke aufweist, die kleiner ist als die in Durchströmungsrichtung gemessene Dicke der Partikelfiltermediumlage (2),
**dass** das Filtermaterial (1) zickzackförmig zu einem hohlzylindrischen oder quaderförmigen Körper gefaltet ist,
**dass** die Koaleszermediumlage (3) oder die Anordnung aus mehreren Koaleszermediumlagen (3) eine Dicke zwischen 0,1 und 1,5 mm, vorzugsweise zwischen 0,2 und 0,6 mm, hat und
**dass** an einer stromab liegenden Seite des gefalteten Filtermaterials (1) die Koaleszermediumlage (3) oder Anordnung aus mehreren Koaleszermediumlagen (3) als Abstandshalter zwischen den Falten der Partikelfiltermediumlage (2) wirkt.

2. Filtereinsatz nach Anspruch 1, **dadurch gekennzeichnet, dass** die/jede Koaleszermediumlage (3) aus einem Fasermaterial oder aus einem Schaum- oder Sintermaterial gebildet ist.

3. Filtereinsatz nach Anspruch 2, **dadurch gekennzeichnet, dass** die/jede aus einem Fasermaterial gebildete Koaleszermediumlage (3) aus einem Schmelz-Blas-Vlies ("Meltblown-Vlies") oder einem nassgelegten Vlies oder einem Gewebe oder einem Filz gebildet ist.

4. Filtereinsatz nach Anspruch 2 oder 3, **dadurch gekennzeichnet, dass** die/jede aus einem Fasermaterial gebildete Koaleszermediumlage (3) aus synthetischen Fasern, vorzugsweise aus Polyesterfasern, weiter vorzugsweise aus Polyamidfasern, oder aus hydrophilen Fasern, vorzugsweise Zellulose, Naturwolle oder Naturfasern, gebildet ist.

5. Filtereinsatz nach einem der Ansprüche 2 bis 4, **dadurch gekennzeichnet, dass** die Koaleszermediumlage (3) oder eine Anordnung aus mehreren Koaleszermediumlagen (3) hinsichtlich ihrer Faserdicke und/oder ihrer Faserdichte und/oder ihrer Porosität und/oder ihrer Porendurchmesser und/oder ihres Luftdurchlasses und/oder ihrer Permeabilität und/oder einer Ausrüstung und/oder ihrer Oberflächenenergie und/oder ihrer Hydrophilie gradientenfrei ausgebildet ist.

6. Filtereinsatz nach einem der Ansprüche 2 bis 5, **dadurch gekennzeichnet, dass** die Fasern der/jeder Koaleszermediumlage (3) einen Faserdurchmesser zwischen 0,3 und 50 µm, vorzugsweise zwischen 1 und 40 µm, weiter vorzugsweise zwischen 3 und 30 µm, und einen mittleren Faserdurchmesser von größer als 2 µm, vorzugsweise größer als 5 µm, weiter vorzugsweise größer als 10 µm, haben.

7. Filtereinsatz nach einem der Ansprüche 1 bis 6, **dadurch gekennzeichnet, dass** die/jede Koaleszermediumlage (3) einen Porengrößenbereich zwischen 0,5 bis 150 µm, vorzugsweise zwischen 2 und 120 µm, und eine mittlere Porengröße von größer als 4 µm, vorzugsweise größer als 8 µm, hat.

8. Filtereinsatz nach einem der Ansprüche 1 bis 7, **dadurch gekennzeichnet, dass** die/jede Koaleszermediumlage (3) einen MFP-Wert ("Mean Flow Pore Size") von größer als 8 µm, vorzugsweise von größer als 12 µm, weiter vorzugsweise von größer als 25 µm, hat.

9. Filtereinsatz nach einem der Ansprüche 1 bis 8, **dadurch gekennzeichnet, dass** die Koaleszermediumlage (3) oder die Anordnung aus mehreren Koaleszermediumlagen (3) bei einem Differenzdruck von 200 Pa eine Luftdurchlässigkeit von weniger als 3.000 l/m²s, vorzugsweise von weniger als 2.000 l/m²s, aufweist.

10. Filtereinsatz nach einem der Ansprüche 1 bis9, **dadurch gekennzeichnet, dass** die Anordnung aus mehreren Koaleszermediumlagen (3) zwei oder drei Lagen umfasst.

11. Filtereinsatz nach einem der Ansprüche 1 bis10, **dadurch gekennzeichnet, dass** die Partikelfiltermediumlage (2) aus einem Filterpapier oder Filtervlies oder Filterfilz oder Filternonwoven oder Filtergewebe oder Sinter- oder Filterelement-Formelement gebildet ist.

12. Filtereinsatz nach einem der Ansprüche 1 bis11, **dadurch gekennzeichnet, dass** die Koaleszermediumlage (3) oder die Anordnung aus mehreren Koaleszermediumlagen (3) auf die Partikelfiltermediumlage (2) locker aufgelegt ist oder dass die Koaleszermediumlage (3) oder die Anordnung aus mehreren Koaleszermediumlagen (3) mit der Partikelfiltermediumlage (2) verbunden, insbesondere aufgeklebt oder thermofixiert oder thermokalandert, ist.

13. Filtereinsatz nach einem der Ansprüche 1 bis 12, **dadurch gekennzeichnet, dass** in Durchströmungsrichtung gesehen stromab des Filterstoffkörpers (4) im Abstand von diesem ein Sieb (5) angeordnet ist.

14. Filtereinsatz nach Anspruch 13, **dadurch gekennzeichnet, dass** das Sieb (5) eine Durchlassöffnungsgröße zwischen 5 und 200 µm, vorzugsweise zwischen 10 und 100 µm, weiter vorzugsweises zwischen 10 und 30 µm, aufweist.

15. Kraftstofffilter zum Abscheiden von festen Partikeln und von Wassertröpfchen aus Kraftstoff,
**dadurch gekennzeichnet,**
**dass** der Kraftstofffilter wenigstens einen Filtereinsatz nach einem der Ansprüche 1 bis 14 aufweist.

## Claims

1. Filter insert of a fuel filter to separate solid particles and water droplets from fuel, wherein the filter insert comprises at least one filter material body (4) made of a filter material (1) consisting of a particle filter medium layer (2) through which the fuel flows first during operation and at least one coalescing medium layer (3) lying downstream on the particle filter medium layer (2),
**characterised in**
**that** the coalescing medium layer (3) or an arrangement of several coalescing medium layers (3) has a specifiable minimum hydrophilicity, where the measure of hydrophilicity according to a water grade test corresponds to an isopropanol proportion by volume of 25 %, preferably 20 %, further preferably 15 %,
**that** the coalescing medium layer (3) or the arrangement of several coalescing medium layers (3) is free of gradients in the direction of flow with regard to its geometric structure and/or its physical properties and/or its chemical properties,
**that** the coalescing medium layer (3) or the arrangement of several coalescing medium layers (3) has a thickness measured in the direction of flow that is smaller than the thickness of the particle filter medium layer (2) measured in the direction of flow,
**that** the filter material (1) is folded in zig-zags to form a hollow-cylindrical or cuboid body,
**that** the coalescing medium layer (3) or the arrangement of several coalescing medium layers (3) has a thickness of between 0,1 and 1,5 mm, preferably between 0,2 and 0,6 mm, and
**that** the coalescing medium layer (3) or arrangement of several coalescing medium layers (3) on a downstream side of the folded filter material (1) acts as a spacer between the pleats in the particle filter medium layer (2).

2. The filter insert according to Claim 1, **characterised in that** the/each coalescing medium layer (3) is made of a fibre material or of a foam material or sintered material.

3. The filter insert according to Claim 2, **characterised in that** the/each coalescing medium layer (3) of fibre material is made of a melt-blown fleece or a wet-laid fleece or a fabric or felt.

4. The filter insert according to Claim 2 or 3, **characterised in that** the/each coalescing medium layer (3) of fibre material is made of synthetic fibres, preferably polyester fibres, further preferably polyamide fibres, or of hydrophilic fibres, preferably cellulose, natural wool or natural fibres.

5. The filter insert according to one of Claims 2 to 4, **characterised in that** the coalescing medium layer (3) or an arrangement of several coalescing medium layers (3) is free of gradients with regard to its fibre thickness and/or its fibre density and/or its porosity and/or its pore diameter and/or its air penetrability and/or its permeability and/or a finishing and/or its surface energy and/or its hydrophilicity.

6. The filter insert according to one of Claims 2 to 5, **characterised in that** the fibres of the/each coalescing medium layer (3) have a diameter of between 0,3 and 50 µm, preferably between 1 and 40 µm, further preferably between 3 and 30 µm, and a mean fibre diameter greater than 2 µm, preferably greater than 5 µm, further preferably greater than 10 µm.

7. The filter insert according to one of Claims 1 to 6, **characterised in that** the/each coalescing medium layer (3) has a pore size in the range of 0,5 to 150 µm, preferably between 2 and 120 µm, and a mean pore size greater than 4 µm, preferably greater than 8 µm.

8. The filter insert according to one of Claims 1 to 7, **characterised in that** the/each coalescing medium layer (3) has an MFP (mean flow pore size) value greater than 8 µm, preferably greater than 12 µm, further preferably greater than 25 µm.

9. The filter insert according to one of Claims 1 to 8, **characterised in that** the coalescing medium layer (3) or the arrangement of several coalescing medium layers (3) has an air permeability of less than 3.000 l/m²s, preferably less than 2.000 l/m²s, measured at a differential pressure of 200 Pa.

10. The filter insert according to one of Claims 1 to 9, **characterised in that** the arrangement of several coalescing medium layers (3) includes two or three layers.

11. The filter insert according to one of Claims 1 to 10, **characterised in that** the particle filter medium layer (2) is made of a filter paper or filter fleece or filter felt or filter nonwoven or filter fabric or sintered or filter element form element.

12. The filter insert according to one of Claims 1 to 11, **characterised in that** the coalescing medium layer (3) or the arrangement of several coalescing medium layers (3) is loosely deposited onto the particle filter medium layer (2) or that the coalescing medium layer (3) or the arrangement of several coalescing medium layers (3) is bonded to the particle filter medium layer (2), particularly glued on or thermofixed or thermocalendered.

13. The filter insert according to one of Claims 1 to 12, **characterised in that** a sieve (5) is arranged in spaced relationship to and downstream of the filter material body (4) viewed in the direction of flow.

14. The filter insert according to Claim 13, **characterised in that** the sieve (5) has a passage opening size of between 5 and 200 µm, preferably between 10 and 100 µm, further preferably between 10 and 30 µm.

15. Fuel filter for separating solid particles and water droplets from fuel,
**characterised in**
**that** the fuel filter comprises at least one filter insert according to one of Claims 1 to 14.

## Revendications

1. Élément filtrant d'un filtre à carburant pour séparer du carburant les particules solides et les gouttelettes d'eau, l'élément filtrant présentant au moins un corps en tissu filtrant (4) à base d'un matériau de filtrage (1), ledit matériau de filtrage (1) se composant d'une couche de support de filtre particulaire (2) traversée, dans l'élément, d'abord par le carburant, et d'au moins une couche de support de coalesceur (3) reposant en aval sur la couche de support de filtre particulaire (2),
**caractérisé en ce**
**que** la couche de support de coalesceur (3) ou un agencement de plusieurs couches de support de coalesceur (3) présentent une hydrophilie minimum prédéfinissable, la mesure de l'hydrophilie correspondant selon un test de note d'eau à une fraction volumique en isopropanol de 25 %, de préférence de 20 %, mieux encore de 15 %,
**que** la couche de support de coalesceur (3) ou l'agencement de plusieurs couches de support de coalesceur (3) sont conçus, en ce qui concerne leur structure géométrique et/ou leurs caractéristiques physiques et/ou leurs caractéristiques chimiques, sans gradient dans le sens d'écoulement du flux,
**que** la couche de support de coalesceur (3) ou l'agencement de plusieurs couches de support de coalesceur (3) présentent une épaisseur, mesurée dans le sens de passage du flux, inférieure à l'épaisseur de la couche de support de filtre particulaire (2) mesurée dans le sens de passage du flux, que le matériau de filtrage (1) est plié en zigzags pour former un corps cylindrique creux ou en forme de parallélépipède droit,
**que** la couche de support de coalesceur (3) ou l'agencement de plusieurs couches de support de coalesceur (3) ont une épaisseur comprise entre 0,1 et 1,5 mm, de préférence entre 0,2 et 0,6 mm, et
**que** sur un côté en amont du matériau de filtrage (1) plié, la couche de support de coalesceur (3) ou l'agencement de plusieurs couches de support de coalesceur (3) servent d'écarteur entre les plis de la couche de support de filtre particulaire (2).

2. Élément filtrant selon la revendication 1, **caractérisé en ce que** la/chaque couche de support de coalesceur (3) est constituée d'un matériau fibreux ou d'un matériau alvéolaire ou d'un matériau aggloméré.

3. Élément filtrant selon la revendication 2, **caractérisé en ce que** la/chaque couche de support de coalesceur (3) constituée d'un matériau fibreux est constituée d'une étoffe non tissée soufflée à l'état fondu ("étoffe meltblown") ou d'un étoffe non tissée couchée par voie humide ou en tissu tissé ou en feutre.

4. Élément filtrant selon la revendication 2 ou 3, **caractérisé en ce que** la/chaque couche de support de coalesceur (3) constituée d'un matériau fibreux est constituée de fibres synthétiques, de préférence de fibres de polyester, mieux encore de fibres de polyamide, ou de fibres hydrophiles, de préférence en cellulose, laine vierge ou fibres naturelles.

5. Élément filtrant selon l'une quelconque des revendications 2 à 4, **caractérisé en ce que** la couche de support de coalesceur (3) ou un agencement de plusieurs couches de support de coalesceur (3) sont conçus sans gradient en ce qui concerne leur épaisseur de fibres et/ou leur densité fibreuse et/ou leur porosité et/ou leur diamètre de pores et/ou leur passage d'air et/ou leur perméabilité et/ou leur équipement et/ou leur énergie en surface et/ou leur hydrophilie.

6. Élément filtrant selon l'une quelconque des revendications 2 à 5, **caractérisé en ce que** les fibres des/de chaque couche(s) de support de coalesceur (3) ont un diamètre de fibre compris entre 0,3 et 50 µm, de préférence entre 1 et 40 µm, mieux encore entre 3 et 30 µm, et un diamètre de fibre moyen de plus de 2 µm, de préférence de plus de 5 µm, mieux encore de plus de 10 µm.

7. Élément filtrant selon l'une quelconque des revendications 1 à 6, **caractérisé en ce que** la/chaque couche de support de coalesceur (3) a une fourchette de tailles de pores comprise entre 0,5 et 150 µm, de préférence entre 2 et 120 µm, et une taille de pore moyenne de plus de 4 µm, de préférence de plus de 8 µm.

8. Élément filtrant selon l'une quelconque des revendications 1 à 7, **caractérisé en ce que** la/chaque couche de support de coalesceur (3) a une valeur MFP ("mean flow pore size") de plus de 8 µm, de préférence de plus de 12 µm, mieux encore de plus 25 µm.

9. Élément filtrant selon l'une quelconque des revendications 1 à 8, **caractérisé en ce que** la couche de support de coalesceur (3) ou l'agencement de plusieurs couches de coalesceur (3) présentent une perméabilité à l'air de moins de 3 000 l/m²s, de préférence de moins de 2 000 l/m²s, mesurée à une pression différentielle de 200 Pa.

10. Élément filtrant selon l'une quelconque des revendications 1 à 9, **caractérisé en ce que** l'agencement de plusieurs couches de support de coalesceur (3) comprend deux ou trois couches.

11. Élément filtrant selon l'une quelconque des revendications 1 à 10, **caractérisé en ce que** la couche de support de filtre particulaire (2) est constituée d'un papier de filtrage ou d'une étoffe non tissée de filtrage ou d'un feutre de filtrage ou d'un matériau de filtrage non tissé ou d'un tissu tissé de filtrage ou d'un élément de forme aggloméré ou d'élément de filtrage.

12. Élément filtrant selon l'une quelconque des revendications 1 à 11, **caractérisé en ce que** la couche de support de coalesceur (3) ou l'agencement de plusieurs couches de support de coalesceur (3) est posée de manière non fixe sur la couche de support de filtre particulaire (2) ou que la couche de support de coalesceur (3) ou l'agencement de plusieurs couches de support de coalesceur (3) sont reliés à la couche de support de filtre particulaire (2), notamment reliés dessus ou fixés par chaleur ou calandrés par chaleur.

13. Élément filtrant selon l'une quelconque des revendications 1 à 12, **caractérisé en ce qu'**est agencé un tamis (5), en aval du corps en tissu filtrant (4) vu dans le sens de passage du flux, à distance de celui-ci.

14. Élément filtrant selon la revendication 13, **caractérisé en ce que** ledit tamis (5) présente une taille d'ouverture de passage comprise entre 5 et 200 µm, de préférence entre 10 et 100 µm, mieux encore entre 10 et 30 µm.

15. Filtre à carburant destiné à séparer du carburant les particules solides et les gouttelettes d'eau,
**caractérisé en ce**
**que** le filtre à carburant présente au moins un élément filtrant de filtrage selon l'une quelconque des revendications 1 à 14.
